# EUROPÄISCHE PATENTSCHRIFT

(11) **EP 3 818 579 B1**
(45) Veröffentlichungstag und Bekanntmachung des Hinweises auf die Patenterteilung: **06.07.2022**
(21) Anmeldenummer: 19752644.5
(22) Anmeldetag: 05.07.2019
(51) Int. Cl.: H01M 6/16, H01M 10/0525, H01M 10/0567, H01M 10/0568, H01M 10/0569

(54) **ELEKTROLYT MIT EINEM PHOSPHIT ALS ADDITIV ODER CO-LÖSEMITTEL, LITHIUM-SEKUNDÄRBATTERIE MIT DIESEM ELEKTROLYTEN UND VERFAHREN ZUR HERSTELLUNG DES PHOSPHITS**
ELECTROLYTE COMPRISING PHOSPHITE AS AN ADDITIVE OR CO-SOLVENT, LITHIUM SECONDARY BATTERY COMPRISING THE ELECTROLYTE, AND METHOD OF MANUFACTURING SAID PHOSPHITE
L'ÉLECTROLYTE COMPRENANT PHOSPHITE COMME UN ADDITIF OU UN CO-SOLVANT, UNE BATTERIE SECONDAIRE DE LITHIUM COMPRENANT L'ÉLECTROLYTE ET LA MÉTHODE POUR FABRIQUER LE PHOSPHITE

(30) Priorität: 06.07.2018 DE 102018116475
(43) Veröffentlichungstag der Anmeldung: 12.05.2021
(73) Patentinhaber: Forschungszentrum Jülich GmbH, 52425 Jülich (DE); Jacobs University Bremen gGmbH, 28759 Bremen (DE)
(72) Erfinder: KOZEL, Volodymyr, 28215 Bremen (DE); VON ASPERN, Natascha, 48153 Münster (DE); RÖSCHENTHALER, Gerd-Volker, 28357 Bremen (DE); WINTER, Martin, 48149 Münster (DE); STUBBMANN-KAZAKOVA, Olesya, 27211 Bassum (DE); CEKIC-LASKOVIC, Isidora, 48161 Münster (DE); WÖLKE, Christian, 48147 Münster (DE)
(74) Vertreter: Weidner Stern Jeschke
(86) Internationale Anmeldenummer: PCT/DE2019/200071
(87) Internationale Veröffentlichungsnummer: WO 2020/007425

(56) Entgegenhaltungen:
- WO-A1-03/081620
- DE-A1-102015 225 697
- US-A1- 2007 048 622

## Beschreibung

### Gebiet der Erfindung

Die Erfindung betrifft einen Elektrolyten mit einem Phosphit als Additiv oder Co-Lösemittel, eine Lithium-Sekundärbatterie mit diesem Elektrolyten sowie ein Verfahren zur Herstellung des Phosphits.

### Hintergrund der Erfindung

Zur Realisierung der effizienten Nutzung von erneuerbaren Energien und für den Einsatz in der Elektromobilität hat die Wichtigkeit von Batterien als Energiequelle und Speichermedium in den letzten Jahren stark zugenommen. Um die angestrebten Ziele erreichen zu können, müssen die Batterien aber fortlaufend verbessert werden.

In allen Arten von gegenwärtigen wie zukünftigen Lithium-, Lithium-Ionen- und Dual-Ionen-Batterien haben die Elektrolyte aufgrund ihrer Wechselwirkung mit allen übrigen eingesetzten Aktiv- und Inaktivmaterialien eine zentrale Schlüsselfunktion im Hinblick auf die Leistungsfähigkeit, Lebensdauer und Sicherheit. Der flüssige Elektrolyt hat einen signifikanten Einfluss auf eine Vielzahl von chemischen und technologischen Aspekten einer Batterie. Das Spektrum reicht von der Leitfähigkeit - aufgrund des Lösungsvermögens der Leitsalze - über die elektrochemische Stabilität, die Benutzbarkeit, die Entflammbarkeit und den Dampfdruck bis hin zu den filmbildenden Eigenschaften des Elektrolyten, die wesentliche Auswirkungen auf die sogenannte "Solid Electrolyte Interface" (SEI) bei der Bildung an der Anode bzw. die "Cathode Electrolyte Interface" (CEI) bei der Ausbildung an der Kathode aufweist.

Der flüssige Elektrolyt als Kernbestandteil jeder Batteriezelle besteht aus einem Leitsalz, wie zum Beispiel LiPF₆ und einem Gemisch aus ausgewählten linearen und zyklischen Carbonaten (im Allgemeinen als Standardelektrolyt bezeichnet).

Eine große Schwachstelle solcher Elektrolyten ist die geringe oxidative Stabilität und die hohe Brennbarkeit (Xu, K. Chem. Rev. 2004, 104 (10), 4.303 - 4.418).

Die oxidative Stabilität stellt insbesondere dann ein großes Problem dar, wenn durch die Entwicklung neuer Kathodenmaterialien (5 V-Kathoden) höhere Ladeschlussspannungen verwendet werden und somit die Energiedichte erhöht wird (Xu, K., Chem. Rev. 2014, 114 (23), 11503-11618).

Bei der Verwendung einer Ladeschlussspannung über 4,3 V gegen eine Lithiumreferenz (Li/Li⁺) kommt es zu einer oxidativen Zersetzung des Carbonat-basierten Elektrolyten an der Kathode, was eine verstärkte Kapazitätsabnahme zur Folge hat und somit die Lebensdauer der Batterie verringert.

Ein Ansatz, um die Zersetzung des Elektrolyten an der Kathode und die daraus folgende Kapazitätsabnahme zu verhindern, ist der Einsatz von Additiven in Elektrolyten (üblicherweise in einer Menge von 0,1 bis 5 Gew.-%). Der Vorteil dieses Ansatzes ist, dass die Hauptstruktur des Elektrolyten erhalten bleibt. Die Rolle des Additivs ist, eine Schutzschicht (CEI) auf der Kathode zu bilden und somit die Elektrolytzersetzung des Standardelektrolyten zu verhindern bzw. zu vermindern (Xu, K., Chem. Rev. 2014, 114 (23), 11503-11618).

Aus dem Stand der Technik sind hierfür eine ganze Reihe unterschiedlicher Additive bekannt. Zum einen sind dies teilweise fluorierte organische Verbindungen, die außer Fluor keine Heteroatome enthalten (Zheng, X.; Huang, T.; Pan, Y.; Wang, W.; Fang, G.; Ding, K.; Wu, M., ACS Applied Materials & Interfaces 2017, 9 (22), 18758-18765; Kim, S.; Kim, M.; Choi, I.; Kim, J. J., J. Power Sources 2016, 336 (Supplement C), 316-324), sowie teilweise fluorierte organische Verbindungen, die zusätzlich folgende Heteroatome enthalten: Stickstoff (siehe z.B. Wang, L.; Ma, Y.; Li, Q.; Zhou, Z.; Cheng, X.; Zuo, P.; Du, C.; Gao, Y.; Yin, G., J. Power Sources 2017, 361 (Supplement C), 227-236), Phosphor (siehe z.B. von Aspern, N.; Röser, S.; Rezaei Rad, B.; Murmann, P.; Streipert, B.; Mönnighoff, X.; Tillmann, S. D.; Shevchuk, M.; Stubbmann-Kazakova, O.; Röschenthaler, G.-V.; Nowak, S.; Winter, M.; Cekic-Laskovic, I., J. Fluor. Chem. 2017, 198 (Supplement C), 24-33; Tornheim, A.; He, M.; Su, C.-C.; Zhang, Z., J. Electrochem. Soc. 2017, 164 (1), A6366-A6372; Wagner, R.; Korth, M.; Streipert, B.; Kasnatscheew, J.; Gallus, D. R.; Brox, S.; Amereller, M.; Cekic-Laskovic, I.; Winter, M., ACS Applied Materials & Interfaces 2016, 8 (45), 30871-30878), Schwefel (siehe z.B. Rong, H.; Xu, M.; Zhu, Y.; Xie, B.; Lin, H.; Liao, Y.; Xing, L.; Li, W., J. Power Sources 2016, 332 (Supplement C), 312-321) ; Bor (siehe z.B. Wang, K.; Xing, L.; Zhu, Y.; Zheng, X.; Cai, D.; Li, W., J. Power Sources 2017, 342 (Supplement C), 677-684) ; Silicium (siehe z.B. Wang, K.; Xing, L.; Zhu, Y.; Zheng, X.; Cai, D.; Li, W., J. Power Sources 2017, 342 (Supplement C), 677-684 ; Imholt, L.; Röser, S.; Börner, M.; Streipert, B.; Rad, B. R.; Winter, M.; Cekic-Laskovic, I., Electrochim. Acta 2017, 235 (Supplement C), 332-339) .

Darüber hinaus wurden auch Organometall-basierte (Imholt, L.; Röser, S.; Börner, M.; Streipert, B.; Rad, B. R.; Winter, M.; Cekic-Laskovic, I., Electrochim. Acta 2017, 235 (Supplement C), 332-339) und Lithiumsalz-basierte (siehe z.B. Dong, Y.; Young, B. T.; Zhang, Y.; Yoon, T.; Heskett, D. R.; Hu, Y.; Lucht, B. L., ACS Applied Materials & Interfaces 2017, 9 (24), 20467-20475) Elektrolyt-Additive vorgeschlagen.

Durch die Zugabe dieser Additive zum Standardelektrolyten kann die Kapazitätsabnahme verringert, jedoch nicht komplett verhindert werden. Alle diese Additive zersetzen sich bei der Oxidation an der Kathode vor dem Standardelektrolyten und bilden eine effektive CEI aus. Durch diese CEI kann die weitere Elektrolytzersetzung verhindert, der Innenwiderstand verringert, die strukturelle Stabilität der Kathode verbessert, die Bildung von Gasen und die Metallauflösung der in der Kathode befindlichen Metalle verhindert und die Ionenmischung von Li⁺- und Ni²⁺-Ionen in der Kathode aufgrund ähnlich großer Ionenradien minimiert werden.

Neben der oxidativen Zersetzung bei hohen Ladeschlussspannungen stellt der Sicherheitsaspekt, insbesondere die Brennbarkeit, eines Carbonat-basierten Elektrolyten ein wichtiges Problem dar. Die üblicherweise verwendeten linearen und zyklischen Carbonate sind leicht entzündlich; es gibt immer wieder Berichte über die Entstehung von Batteriebränden, wie z.B. beim Samsung Galaxy Note 7 im Jahre 2016. Aus diesem Grunde ist es wichtig, im Hinblick auf die Brennbarkeit sicherere Batterien zu entwickeln.

Neben der Entwicklung von neuen Lösemitteln für Elektrolyte ist es möglich, Flammschutzmittel als Additive (<5 Gew.-%) oder Co-Lösemittel (>5 Gew.-%) zum Standardelektrolyten zuzugeben (Xu, K., Chem. Rev. 2004, 104 (10), 4303-4418; Xu, K., Chem. Rev. 2014, 114 (23), 11503-11618). Auch bei diesem Ansatz wird die Hauptstruktur des Elektrolyten nicht verändert.

Als effektive Flammschutzmittel haben sich Verbindungen bewährt, die Phosphoratome in der Oxidationsstufe III oder V enthalten. Verbindungen mit Phosphoratomen in der Oxidationsstufe V können in zwei Untergruppen aufgeteilt werden: zum einen Phosphate/Phosphite, zum anderen Phosphazene, die neben mehreren Phosphoratomen auch noch mehrere Stickstoffatome enthalten.

Es hat sich gezeigt, dass bei der Verwendung von Phosphiten (Oxidationsstufe III) und Phosphaten (Oxidationsstufe V) als Flammschutzmittel ein hoher Anteil (>20 Gew.-%) erforderlich ist, um einen nicht-brennbaren Elektrolyten zu erhalten (siehe z.B. von Aspern, N.; Röser, S.; Rezaei Rad, B.; Murmann, P.; Streipert, B.; Mönnighoff, X.; Tillmann, S. D.; Shevchuk, M.; Stubbmann-Kazakova, O.; Röschenthaler, G.-V.; Nowak, S.; Winter, M.; Cekic-Laskovic, I., J. Fluor. Chem. 2017, 198 (Supplement C), 24-33; Murmann, P.; Mönnighoff, X.; von Aspern, N.; Janssen, P.; Kalinovich, N.; Shevchuk, M.; Kazakova, O.; Röschenthaler, G.-H.; Cekic-Laskovic, I.; Winter, M., J. Electrochem. Soc. 2016, 163 (5), A751-A757). Der hohe Anteil an Flammschutzmittel beeinflusst jedoch die Zyklisierung (Leistungsfähigkeit und Lebensdauer) der Batterie im negativen Sinne verglichen mit dem Standardelektrolyten. Dies liegt in erster Linie an der Inkompatibilität der verwendeten Flammschutzmittel gegenüber der graphitischen Anode.

Um die Inkompatibilität dieser Flammschutzmittel gegenüber der graphitischen Anode zu verbessern, hat sich der Ersatz der Wasserstoffatome durch Fluoratome als ein effektiver Ansatz erwiesen. Durch diesen Ansatz konnte die Zyklisierung, und damit die Lebensdauer, der Batterie gegenüber dem nicht-fluorierten Co-Lösemittel deutlich verbessert werden. Die Leistungsfähigkeit und Lebensdauer der Standardelektrolyten konnte jedoch nicht erreicht werden (Murmann, P.; Mönnighoff, X.; von Aspern, N.; Janssen, P.; Kalinovich, N.; Shevchuk, M.; Kazakova, O.; Röschenthaler, G.-H.; Cekic-Laskovic, I.; Winter, M., J. Electrochem. Soc. 2016, 163 (5), A751-A757; Mönnighoff, X.; Murmann, P.; Weber, W.; Winter, M.; Nowak, S., Electrochim. Acta 2017, 246 (Supplement C), 1042-1051).

Ein weiterer Vorteil der Einführung von Fluoratomen ist, dass diese auch einen Einfluss auf die Brennbarkeit haben, das heißt, dass fluorierte Verbindungen die Brennbarkeit des Elektrolyten prinzipiell besser als nicht-fluorierten Verbindungen reduzieren können. Allerdings ist die Flammchemie fluorierter Verbindungen komplex und noch nicht vollständig verstanden, der Grad der Fluorierung lässt daher keine Rückschlüsse über die Entflammbarkeit einzelner Verbindungen zu (Murmann, N. von Aspern, P. Janssen, N. Kalinovich, M. Shevchuk, G.-V. Röschenthaler, M. Winter, I. Cekic-Laskovic, J. Electrochem. Soc. 2018, 165, A1935-A1942; P. Murmann, X. Mönninghoff, N. von Aspern, P. Janssen, N. Kalinovich, M. Shevchuk, O. Kazakova, G.-V. Röschenthaler, I. Cekic-Laskovic, M. Winter, J. Electrochem. Soc. 2016, 163, A715-A757).

Durch die Verwendung von Phosphazenen als Flammschutzmittel kann der Anteil (5 Gew.-%) drastisch reduziert werden, um ein nicht-brennbaren flüssigen Elektrolyten zu erhalten, wobei sich kein negativer Einfluss auf die Zyklisierung zeigt. Des Weiteren können diese Additive auch für Hochvoltanwendungen verwendet werden, da sie eine effektive CEI ausbilden (Ji, Y.; Zhang, P.; Lin, M.; Zhao, W.; Zhang, Z.; Zhao, Y.; Yang, Y., J. Power Sources 2017, 359 (Supplement C), 391-399; Xia, L.; Xia, Y.; Liu, Z., J. Power Sources 2015, 278 (Supplement C), 190-196).

Diese bifunktionelle Anwendung ist für Phosphite und Phosphate nicht bekannt. Es konnte aber schon gezeigt werden, dass durch die Variation des Anteils der Phosphite/Phosphate im Standardelektrolyten unterschiedliche Anwendungen realisiert werden können. Bei einem geringen Anteil (1 Gew.-%) können die Phosphite/Phosphate als Hochvoltadditive eingesetzt werden, bei einem hohen Anteil (> 20 Gew.-%) dienen sie als Flammschutzmittel (von Aspern, N.; Röser, S.; Rezaei Rad, B.; Murmann, P.; Streipert, B.; Mönnighoff, X.; Tillmann, S. D.; Shevchuk, M.; Stubbmann-Kazakova, O.; Röschenthaler, G.-V.; Nowak, S.; Winter, M.; Cekic-Laskovic, I., J. Fluor. Chem. 2017, 198 (Supplement C), 24-33). Bei dieser Arbeit wurden jedoch keine elektrochemischen Messungen für den hohen Phosphit/Phosphatanteil durchgeführt, sodass keine Aussage bezüglich der Leistungsfähigkeit und Lebensdauer der Batterien getroffen werden kann.

Bei den Untersuchungen des Standardelektrolyten nach elektrochemischer Alterung wurden unterschiedliche Phospholane mit der Oxidationsstufe V als Zersetzungsprodukte beobachtet (Takeda, S.; Morimura, W.; Liu, Y.-H.; Sakai, T.; Saito, Y., Rapid Commun. Mass Spectrom. 2016, 30 (15), 1754-1762; Weber, W.; Kraft, V.; Grützke, M.; Wagner, R.; Winter, M.; Nowak, S., J. Chromatogr. A 2015, 1394 (Supplement C), 128-136). Um den Einfluss dieser Zersetzungsprodukte auf den Standardelektrolyten zu untersuchen, wurden Phospholane als Lösemittel, Co-Lösemittel oder Additive untersucht und zeigten einen positiven Einfluss auf die allgemeine elektrochemische Leistungsfähigkeit der Batterie. Bei der Verwendung als Lösemittel zusammen mit Ethylencarbonat (EC) wurden Phospholane mit der Oxidationsstufe III und V untersucht, wobei die Endgruppe der Alkylgruppe 0 bis 3 Fluoratome aufweisen kann. Für dieses System wurde postuliert, dass es sich in Li/LMO-Zellen mit einer Ladeschlussspannung von 4,2 V vs. Li/Li⁺ ähnlich wie die zyklischen Phosphate verhält und dass es sich um ein feuerhemmendes Lösemittel handelt (Narang, S. C.; Ventura, S. C.; Zhao, M.; Smedley, S.; Koolpe, G.; Dougherty, B. WO97/44842).

Bei der Verwendung eines Co-Lösemittels, wie z.B. Ethylenethylphosphat (EEP), das keine Fluoratome enthält, kann durch die Zugabe von 10 Gew.-% die Brennbarkeit des Elektrolyten um ca. 50 % reduziert werden. Des Weiteren kann durch die Ausbildung eines Schutzfilms auf der Anode und Kathode eine Verbesserung der Zyklisierung bei einer Ladeschlussspannung von 4,3 V vs. Li/Li⁺ gegenüber dem Standardelektrolyten erzielt werden (Gao, D.; Xu, J. B.; Lin, M.; Xu, Q.; Ma, C. F.; Xiang, H. F., RSC Adv. 2015, 5 (23), 17566-17571).

Auch weitere Phospholane mit der Oxidationsstufe III wurden als Co-Lösemittel bzw. Additive untersucht. Dabei wurde die Länge und der Fluorierungsgrad der Alkylgruppe variiert sowie der Ring durch ein oder zwei Alkylketten substituiert, wobei auch hier die Länge und der Fluorierungsgrad variiert wurden. Hierbei konnte eine ca. 30%-ige Abnahme der Brennbarkeit gegenüber dem Standardelektrolyten gezeigt werden, bei einer Zugabe von 30 Gew.-% des Phospholans. Bei der galvanostatischen Zyklisierung einer Halbzelle bei 0.001 V bis 1.5 V zeigten die Zellen, die ein Phospholan als Co-Lösemittel enthielten, ein gutes Lade- und Entladeprofil. Allerdings liegen die erreichten Kapazitäten immer noch deutlich unter dem des Standardelektrolyten. Bei der Verwendung als Additiv konnten wiederum bessere Kapazitäten gegenüber dem Standardelektrolyten erreicht werden (US 8062796 B2). Ein Versuch an Vollzellen wurde nicht durchgeführt.

Es ist allerdings bekannt, dass sich Messergebnisse von Halbzellen nicht ohne Weiteres auf Vollzellen übertragen lassen (V. Sharova, A. Moretti, T. Diemant, A. Varzi, R. J. Behm, S. Passerini, J. Power Sources (2018), 375, 43-52). Aus dem Stand der Technik ist weiterhin bekannt, dass Zellen bei der Verwendung von Entladeschlussspannung bis 4.2 V ein deutlich anderes Verhalten als bei der Verwendung von Entladeschlussspannung über 4.2 V (Hochvoltanwendungen) zeigen (J. Li, H. Liu, J. Xia, A. R. Cameron, M. Nie, G. A. Botton. J. R. Dahn, J. Electrochem. Soc. (2017), 164, A655-A665; J. Li, S. L. Glazier, K. Nelson, X. Ma, J. Harlow, J. Paulsen, J. R. Dahn, J. Electrochem. Soc. (2018), 165, A3195-A3204).

Außerdem konnte gezeigt werden, dass, wenn EEP (5 Gew.-%) als Additiv zu einem Elektrolyt-Referenzsystem aus Ethylencarbonat:Diethylcarbonat:Trimethylphosphat(6:2:2) zugegeben wird, die Problematik der Phosphatreduktion auf der Anode unterbunden werden kann, durch die Ausbildung einer Schutzschicht auf der Anode, induziert durch EEP, und somit die Zyklisierung bei einer Ladeschlussspannung von 1,5 V vs. Li/Li⁺ verbessert werden kann (Ota, H.; Kominato, A.; Chun, W.-J.; Yasukawa, E.; Kasuya, S., J. Power Sources 2003, 119 (Supplement C), 393-398).

Außerdem kann EEP (bei der Zugabe von 1 Gew.-%) auch für Hochvoltanwendungen eingesetzt werden. Hierbei wurde die Zelle für zehn Lade-/Entladezyklen bis 4,4 V vs. Li/Li bei 20°C zyklisiert, dann wurde die Zelle für 2 h bei 45°C gelagert, um anschließend bis 4,6 V vs. Li/Li⁺ zu laden und dann für 60 h zu halten. Dadurch konnte gezeigt werden, dass EEP eine CEI ausbildet und einen geringeren Innenwiderstand verglichen mit dem Standardelektrolyten aufweist (Tornheim, A.; He, M.; Su, C.-C.; Zhang, Z., J. Electrochem. Soc. 2017, 164 (1), A6366-A6372). Durch diese Tests kann jedoch nicht gezeigt werden, wie sich eine häufige Ladung und Entladung mit hohen Ladeschlussspannungen auf die Leistungsfähigkeit der Batterie auswirkt.

Aus der US 2007/048622 A1 ist ein Elektrolyt bekannt, umfassend ein Lithiumsalz, insbesondere LiPF₆, ein organisches Lösungsmittel, umfassend ein erstes Lösungsmittel mit hoher Permittivität, insbesondere Ethylencarbonat, und ein zweites Lösungsmittel mit einem niedrigen Siedepunkt, insbesondere Diethylcarbonat und eine Phosphatverbindung, dargestellt durch die Formel P(OR¹) (OR²) (OR³) , wobei jeder der Reste R¹, R² und R³ unabhängig voneinander ausgewählt ist aus der Gruppe bestehend aus unsubstituierten Alkylgruppen, halogensubstituierten Alkylgruppen, unsubstituierten Alkenylgruppen, halogensubstituierten Alkenyl- oder Arylgruppen, unsubstituierten Arylgruppen, unsubstituierten Heteroarylgruppen und halogensubstituierten Heteroarylgruppen, wobei die Phosphatverbindung der Formel P(OR¹) (OR²) (OR³) insbesondere 4-Methyl-2-(2,2,3,3-tetrafluorpropoxy)-1,3,2-dioxaphosphoran ist. Der offenbarte Elektrolyt zeigt jedoch eine leichte Entflammbarkeit.

Die WO 03/081620A1 offenbart eine Elektrolytlösung für elektrochemische Zellen mit einem hohen Siedepunkt und einer hohen Leitfähigkeit, die neben Acetonitril mit einem Anteil von 40 - 90 Gew% am Lösungsmittelgewicht als erstem Lösungsmittel (Komponente A) zumindest ein weiteres elektrochemisch stabiles Lösungsmittel (Komponente B) sowie als Komponente C) zumindest ein Leitsalz aufweist. Erfindungsgemäße Elektrolytlösungen weisen hohe Leitfähigkeiten auf, die mit denen von Elektrolytlösungen vergleichbar sind, die Acetonitril als alleiniges Lösungsmittel einsetzen. Gleichzeitig weisen sie aber aufgrund des elektrochemisch stabilen Lösungsmittels auch erhöhte Siedepunkte auf.

Die DE 10 2015 225697 A1 betrifft einen flammresistenten Elektrolyten für wiederaufladbare Lithium-Sekundärbatterien. Der flammresistente Elektrolyt für wiederaufladbare Lithium-Sekundärbatterien kann die Flüchtigkeit eines organischen Lösungsmittels verringern und die Entflammbarkeit inhibieren, um die Stabilität einer Batterie zu verbessern, wenn ein flammresistentes Lösungsmittel, das eine fluorierte Phosphorverbindung auf Phosphazenbasis und eine Verbindung auf Phosphitbasis zum Bilden von Schutzfilmen auf Oberflächen von negativen und positiven Elektroden enthält.

Der Erfindung liegt daher die Aufgabe zugrunde, bisher bekannte Elektrolyte für Lithium-Sekundärbatterien weiter zu verbessern, insbesondere die Brennbarkeit zu verringern und/oder die Leistungsfähigkeit der Batterien auch bei Hochvoltanwendungen zu verbessern.

### Zusammenfassung der Erfindung

Erfindungsgemäß wird diese Aufgabe gelöst durch einen Elektrolyt, umfassend:
wenigstens ein Lithiumsalz;
wenigstens ein erstes und ein zweites organisches Lösemittel, wobei das erste organische Lösemittel eine Dielektrizitätskonstante von mehr als 90 (bei 40 °C) aufweist und das zweite organische Lösemittel einen Siedepunkt von unter 110 °C aufweist; und
wenigstens ein Phosphit der Formel (I) 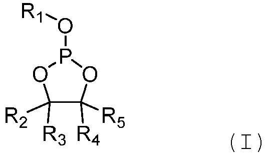 wobei R₁ eine *n*-Propoxygruppe, eine *iso-*Propoxygruppe, eine *tert*-Butoxygruppe, eine *n*-Pentafluorpropoxygruppe, eine *n-*Trifluorpropoxygruppe, eine *iso*-Hexafluorpropoxygruppe oder eine tert-Nonafluorbutoxygruppe ist und R₂, R₃, R₄ und R₅ unabhängig voneinander ausgewählt sind aus H, einer Trifluormethylgruppe oder einer C₂-C₆-Alkylgruppe, welche mit einer Trifluormethylgruppe substituiert ist.

Unter einer n-Propoxygruppe wird die Gruppe H₃C-CH₂-CH₂-O-verstanden, unter einer *iso*-Propoxygruppe die Gruppe [CH₃]₂-CH-O-, unter einer tert-Butoxygruppe die Gruppe [CH₃]₃-C-O-, unter einer *n*-Pentafluorpropoxygruppe die Gruppe F₃C-CF₂-CH₂-O-, unter einer *n*-Trifluorpropoxygruppe die Gruppe F₃C-CH₂-CH₂-O-, unter einer *iso*-Hexafluoropropoxygruppe die Gruppe [CF₃]₂-CH-O- und unter einer tert-Nonafluorbutoxygruppe die Gruppe [CF₃]₃-C-O-.

Die erfindungsgemäßen Elektrolyte weisen eine deutlich reduzierte Entflammbarkeit auf.

Dabei ist zum Erreichen einer reduzierten Entflammbarkeit eine geringere Menge an Phosphit-Additiv notwendig als von den aus dem Stand der Technik bekannten Verbindungen. Hierdurch kann eine Nicht-Brennbarkeit bei einem Additiv-Anteil von 15 Gew.-% erreicht werden, wohingegen für einen vergleichbaren Effekt im Stand der Technik ein Additiv-Anteil von wenigstens 30 Gew.-% notwendig ist (US 8062796 B2).

Die reduzierte Entflammbarkeit lässt sich insbesondere durch Substitution des Phospit-Rings mit Trifluormethylethylengruppen erreichen, wie beispielsweise in der Verbindung PFPOEPi-1CF₃ realisiert.

Im folgenden werden folgende Abkürzungen verwendet:

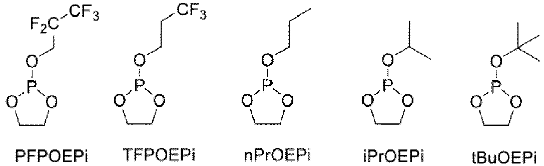

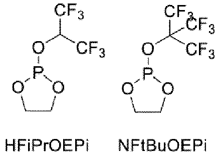

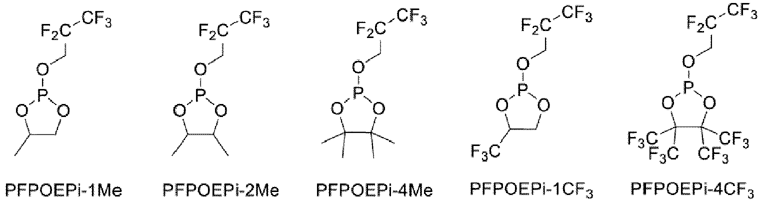

Eine Substanz gilt als brennbar, wenn sie eine Brennzeit von > 20 s/g aufweist. Bei einer Brennzeit zwischen 6 und 20 s/g spricht man von Flammhemmung, < 6 s/g von Nicht-Brennbarkeit.

Unter einem "Normalbereich" können Abschaltspannung bis 4.2 V verstanden werden und unter einem "Hochvoltbereich" Spannungen über 4.2 V, insbesondere eine Spannung von 4.5 V.

Unter einem "verbesserten Zyklisierungsverhalten", "vorteilhaften Zyklisierungsverhalten" oder "positiven Zyklisierungsverhalten" wird ein vergleichsweise höherer Erhalt einer Kapazität einer Zelle bei einer gleichen Zahl von Lade- und Entladezyklen verstanden.

Weiterhin zeigen die erfindungsgemäßen Elektrolyte eine verbesserte Zyklisierbarkeit. Dies gilt insbesondere bei Verwendung von Additiven, in denen R₁ eine aliphatische unsubstituierte Gruppe ist und bei Zyklisierungen über 4.2 V. Bislang war die Nutzung von Phosphiten mit den gezeigten Strukturen oder Dioxaphospholanen im Hochvoltbereich (über 4.2 V) noch nicht bekannt.

Es wurde außerdem gefunden, dass mittels unfluorierter Phosphite überraschend vorteilhafte Zyklisierungsergebnisse erzielt werden können. Bislang wurde im Stand der Technik versucht, die Zyklisierung mittels Fluorierung zu verbessern.

Da die Messungen in Vollzellen durchgeführt werden, kann so gezeigt werden, dass die erfindungsgemäßen Verbindungen sowohl auf der Kathode wie auch auf der Anode zu einem positiven Zyklisierungsverhalten beitragen können.

Vorzugsweise ist R₁ eine n-Propoxygruppe, eine *iso-*Propoxygruppe oder eine *tert*-Butoxygruppe.

In einer bevorzugten Ausführungsform ist R₁ eine tert-Butoxygruppe.

Vorzugsweise ist R₁ eine n-Pentafluorpropoxygruppe.

In einer bevorzugten Ausführungsform sind R₂ eine Trifluormethylgruppe und R₃, R₄ und R₅ H.

In einer anderen Ausführungsform sind R₂, R₃, R₄ und R₅ H.

In einer bevorzugten Ausführungsform ist das wenigstens eine Phosphit in einem Anteil von 0,1 bis 15 Gew.-%, bezogen auf das Gesamtgewicht der organischen Lösemittel, enthalten.

Die Erfindung betrifft weiterhin die Verwendung eines Elektrolyts in einer Lithium-Sekundärbatterie bei einer Spannung größer 4,2 V, wobei der Elektrolyt folgendes umfasst:
- wenigstens ein Lithiumsalz;
- wenigstens ein erstes und ein zweites organisches Lösemittel, wobei das erste organische Lösemittel eine Dielektrizitätskonstante von mehr als 90 (bei 40°C) aufweist und das zweite organische Lösemittel einen Siedepunkt von unter 110°C aufweist; und
- wenigstens ein Phosphit der Formel (I) 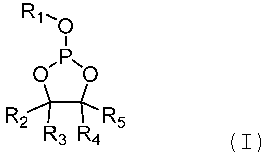
- wobei R₁ eine vollständig oder teilweise halogensubstituierte, lineare oder verzweigte C₂-C₂₀-Alkylgruppe ist und R₂, R₃, R₄ und R₅ unabhängig voneinander ausgewählt sind aus H oder einer unsubstituierten oder vollständig oder teilweise halogensubstituierten, linearen oder verzweigten C₁-C₂₀-Alkylgruppe.

Die Erfindung betrifft außerdem eine Lithium-Sekundärbatterie, umfassend
- eine Kathode;
- eine Anode;
- einen Separator; und
- den Elektrolyten nach einem der Ansprüche 1 bis 7.
Vorzugsweise beträgt der Anteil des Phosphits im Elektrolyten 0,1 bis 15 Gew.-%, bezogen auf das Gesamtgewicht der organischen Lösemittel.

Das wenigstens eine Phosphit ist bevorzugt in einem Anteil von 1 - 30 Gew.-%, bezogen auf das Gesamtgewicht der organischen Lösemittel, enthalten.

Vorzugsweise ist das Lithiumsalz ausgewählt aus der Gruppe, bestehend aus Lithiumperchlorat (LiClO₄), Lithiumhexafluorphosphat (LiPF₆), Lithiumborfluorid (LiBF₄), Lithiumhexafluorarsenid (LiAsF₆), Lithiumtrifluormetasulfonat (LiCF₃SO₃), Lithium-bis-trifluormethylsulfonylimid (LiN(CF₃SO₂)₂), Lithium-bis (oxalato) borat (LiB[C₂O₄]₂), Lithiumoxalyldifluorborat (LiBF₂C₂O₄), Lithiumnitrat (LiNO₃), Lithium-tri-perfluorethylperfluorphosphat (LiPF₃(CF₂CF₃)₃), Lithium-bis-perfluorethylsulfonylimid (C₄F₁₀LiNO₄S₂), Lithium-bis (trifluormethansulfonyl) imid (CF₃SO₂NLiSO₂CF₃), Lithium-bis(fluorsulfonyl)imid (F₂NO₄S₂Li), Lithium-Trifluormethansulfonimid (C₂F₆LiNO₄S₂) und Mischungen derselben.

In einer bevorzugten Ausführungsform der Erfindung ist das erste organische Lösemittel ausgewählt aus der Gruppe, bestehend aus Ethylencarbonat, Polypropylencarbonat, Butylencarbonat, 2,3-Butylencarbonat, Isobutylencarbonat, Propoylencarbonat, γ-Butyrolacton und Mischungen derselben.

In einer weiteren bevorzugten Ausführungsform der Erfindung ist das zweite organische Lösemittel ausgewählt aus der Gruppe, bestehend aus Dimethylcarbonat, Ethylmethylcarbonat, Diethylcarbonat, Dipropylcarbonat, Dimethoxyethan, Diethoxyethan, aliphatischen Esterderivaten und Mischungen derselben.

Vorzugsweise liegen das erste organische Lösungsmittel und das zweite organische Lösungsmittel in einem Verhältnis von 5:1 bis 1:5, weiter bevorzugt 2:1 bis 1:2, besonders bevorzugt 1:1 vor.

Die Erfindung betrifft weiterhin eine Lithium-Sekundärbatterie, umfassend
eine Kathode;
eine Anode;
einen Separator; und
den erfindungsgemäßen Elektrolyten.

Dabei wird der Begriff "Sekundärbatterie" im Zusammenhang dieser Erfindung so verstanden, dass er jeden wiederaufladbaren elektrischen Speicher umfasst.

Vorzugsweise besteht die Aktivmasse der Kathode aus einem Material, das ausgewählt ist aus Lithium-Mangan-Nickel-Oxiden, Lithium-Nickel-Mangan-Cobalt-Mischoxiden des Typs LiMO₂ mit M = Mn, Co, Ni oder des Typs LiMPO₄ mit M = Ni, Mn, Co, und lithiumreichen Übergangsmetalloxiden des Typs xLiMnO₃-(1-x)LiMO₂ mit M = Ni, Mn, Co, und 0 < x < 1.

In einer bevorzugten Ausführungsform besteht die Lithium-Sekundärbatterie aus einem Material, das ausgewählt ist aus der Gruppe, bestehend aus Lithiummetall, Graphit, Silicium und Alkali- oder Erdalkalimetallen.

In einer Ausführungsform der Erfindung beträgt der Anteil des Phosphits im organischen Elektrolyten 1 - 5 Gew.-%, bezogen auf das Gesamtgewicht der organischen Lösemittel. In diesem Fall wird das erfindungsgemäße Phosphit also als Additiv eingesetzt.

In einer anderen Ausführungsform der Erfindung beträgt der Anteil des Phosphits im organischen Elektrolyten 10 - 30 Gew.-%, bezogen auf das Gesamtgewicht der organischen Lösemittel. In diesem Fall dient das erfindungsgemäße Phosphit daher als Co-Lösemittel.

Die Erfindung betrifft weiterhin ein Verfahren zur Herstellung eines Phosphits der Formel (I), bei dem in einer Eintopfreaktion in einem ersten Schritt ein Phosphor(III)-halogenid, vorzugsweise Phosphor(III)-chlorid, mit einem vicinalen Diol in Anwesenheit einer Base, vorzugsweise Triethylamin, umgesetzt wird, um ein 2-Halogen-1,3-dioxaphospholan zu ergeben, und anschließend in einem zweiten Schritt eine Veresterung mit einem Alkohol in Anwesenheit einer Base, vorzugsweise Triethylamin, erfolgt, um ein Phosphit der Formel (I) zu ergeben.

Es konnte gezeigt werden, dass die vorgeschlagenen Phosphite, die erstmals erfolgreich in einer Eintopfsynthese hergestellt werden konnten, vielseitig als Additive bzw. Co-Lösemittel für Elektrolyte von Lithium-Sekundärbatterien eingesetzt werden können. Hierbei bestimmt die richtige Auswahl der Konzentration des Phosphits im Elektrolyten die Anwendung.

Bei einer Verwendung als Additiv (<5 Gew.-%) mit einer Ladeschlussspannung >4,4 V vs. Li/Li⁺ kommt es zur Ausbildung einer effektiven CEI auf der Kathode und die Zyklisierung kann deutlich verbessert werden. Somit kann die Langlebigkeit der Batterien um mindestens 100 Zyklen gegenüber dem Standardelektrolyten verbessert werden, da die Kapazitätsabnahme reduziert wird.

Das erfindungsgemäße Syntheseverfahren für die im erfindungsgemäßen Elektrolyten eingesetzten Phosphite geht aus von einem Phosphor(III)-halogenid (bevorzugt PCl₃) und einem vicinalen Diol in Anwesenheit einer Base wie Pyridin oder Triethylamin in THF als bevorzugtem Lösemittel. Das resultierende 2-halogenierte 1,3-Dioxaphsopholan wird in einem zweiten Schritt der Eintopfsynthese mit einem Alkohol in Anwesenheit von Base, bevorzugt Triethylamin in THF, verestert.

Des Weiteren kann die Batterie durch die Auswahl einer hohen Konzentration (10 - 15 Gew.-%) des Phosphits verbessert werden. Die Brennbarkeit des Elektrolyten kann hierbei komplett unterdrückt werden. Außerdem kann durch die Zugabe von dem Phosphit bei einer Ladeschlussspannung von 4,2 V vs. Li/Li⁺ die Zyklisierung deutlich gegenüber dem Standardelektrolyten verbessert werden. Daraus resultiert eine langlebigere und sicherere Batterie.

In einer weiteren Ausführungsform ist das Phosphit (I) mit einer Trimethylsilylgruppe substituiert. Bei der Zugabe einer Trimethylsilyl-substituierten Verbindung lässt sich die Zyklisierung verbessern. Ohne durch eine Theorie beschränkt sein zu wollen, wird vermutet, dass die Trimethylsilylgruppe intermediär gebildetes Wasserstofffluorid abfängt und dadurch andernfalls auftretende Beschädigungen der Batterie vermeidet.

Die Erfindung betrifft weiterhin die Verwendung von PFPOEPi-1CF₃ in einem Elektrolyt bei 0.1 V bis zu 4.2 V.

Die Erfindung betrifft auch die Verwendung eines Elektrolyts in einer Lithium-Sekundärbatterie bei einer Spannung von 4,2 V oder kleiner 4,2V, wobei der Elektrolyt folgendes umfasst:
wenigstens ein Lithiumsalz;
wenigstens ein erstes und ein zweites organisches Lösemittel, wobei das erste organische Lösemittel eine Dielektrizitätskonstante von mehr als 90 (bei 40°C) aufweist und das zweite organische Lösemittel einen Siedepunkt von unter 110°C aufweist; und
wenigstens ein Phosphit der Formel (I) 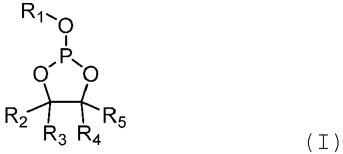 wobei R₁ eine n-Pentafluorpropoxygruppe ist, R₂ eine Trifluormethylgruppe ist und R₃, R₄ und R₅ H.

Durch den Zusatz der Verbindung (I) zum Elektrolyt kann ein vorteilhaftes Zyklisierungsverhalten ermöglicht werden.

### Detaillierte Beschreibung der Erfindung

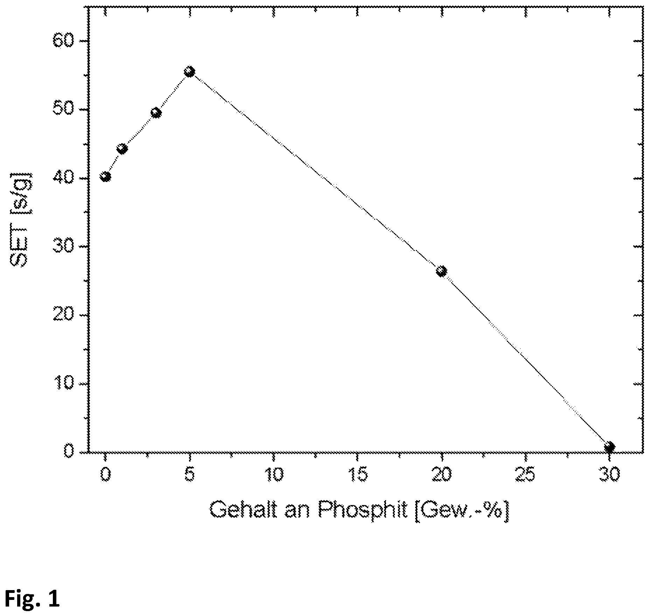

Weitere Vorteile ergeben sich aus der beigefügten Zeichnung sowie den nachfolgenden Beispielen. Dabei zeigt
Fig. 1 ein Diagramm mit den Ergebnissen eines SET (Self-Extinguishing Time)-Tests eines Elektrolyten mit 1M LiPF₆ in Ethylencarbonat und Ethylmethylcarbonat (1:1). Hierbei wurden 500 µl des zu untersuchenden Elektrolyten auf einen Glasfaserfilter GF/C (Whatman Separator) (Ø 25 mm) aufgetragen. Dieser wurde im Messgerät platziert und dann die "Self-Extinguishing Time" mit Hilfe eines UV-Vis-Detektors bestimmt.

### Beispiele

### Herstellungsbeispiel

### Herstellung von 2-(2,2,3,3,3-Pentafluorpropoxy)-4 (trifluormethyl)-1,3,2-dioxaphospholan (Schema 1)

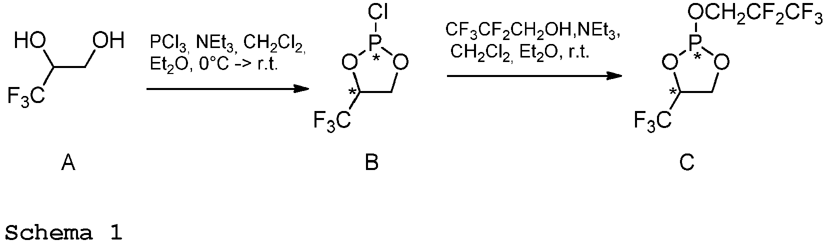

Alle Reaktionsschritte verlaufen unter Argon-Atmosphäre in trockenen Lösemitteln.

15,0 g (0,12 mol, 1 eq.) 3,3,3-Trifluorpropan-1,2-diol (X.J. Wang et al. / Electrochemistry Communications 12 (2010) 386-389) wird mit NEt₃ (23,3 g, 0,24 mol, 2 eq.) umgesetzt und bei 0°C zur Lösung von PCl₃ (16,4 g, 0,12 mol, 1 eq.) in CH₂Cl₂/Et₂O (10:1) (250 ml) langsam zugetropft. Das Eisbad wurde entfernt und das Reaktionsgemisch auf Raumtemperatur gebracht. Der Reaktionsverlauf wurde mittels ³¹P-NMR verfolgt. Nach 48 h war die Umsetzung komplett, wobei das Signal von 2-Chlor-4-(trifluormethyl)-1,3,2-dioxaphospholan bei 172,78 ppm (ca. 70%) beobachtet wurde. Das Produkt wurde mit einer Umkehrfritte unter Argon filtriert, der Rückstand mit Ether nachgewaschen und das Filtrat ohne Reinigung weiter umgesetzt. 18,0 g (0,12 mol, 1 eq.) 2,2,3,3,3-Pentafluorpropanol mit NEt₃ (12,12 g, 0,12 mol, 1 eq.) wurden zum Filtrat zugetropft (Raumtemperatur, Ar). Der Reaktionsverlauf wurde mittels ³¹P-NMR verfolgt. Nach 24 h war die Umsetzung komplett. Es wurden zwei Diastereomere von 2-(2,2,3,3,3-pentafluorpropoxy)-4-(trifluormethyl)-1,3,2-dioxaphospholan und ca. 30% Nebenprodukte beobachtet. Die Reaktionslösung wurde mit einer Umkehrfritte unter Argon filtriert, der Rückstand mit Ether nachgewaschen, das Lösungsmittel abgezogen und der Rückstand destilliert (52 mbar).

Das Diastereomerengemisch von 2-(2,2,3,3,3-Pentafluorpropoxy)-4-(trifluormethyl)-1,3,2-dioxaphospholan (Schema 2) ist eine farblose viskose Flüssigkeit, Sdp. 44°C (52 mbar). Ausbeute: 5,3 g, 0,016 mol = 14% 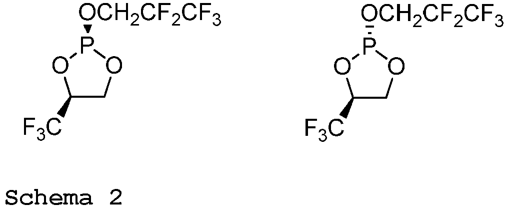
¹H-NMR (400 MHz, CDCl₃): δ 4.79 - 4.69 (m, 1H), 4.54 - 4.45 (m, 1H), 4.41 - 4.34 (m, 1H), 4.33 - 4.15 (m, 5H).
³¹P-NMR (162 MHz, CDCl₃) : δ 145.43 (t, J = 7.2 Hz), 144.06 (t, J = 6.7 Hz).
¹⁹F-NMR (376 MHz, CDCl₃) δ -76.22 (s), -79.31 (s),
83.33 (s), -83.43 (s), -83.50 (s), -124.28 (s), -124.42 (t,
J = 11.9 Hz), -126.03 (t, J = 14.6 Hz).

### Anwendungsbeispiele

Zur Untersuchung des Verhaltens des erfindungsgemäßen Elektrolyten für Hochvoltanwendungen wurde ein Elektrolyt mit 1M LiPF₆ in Ethylencarbonat (EC) und Ethylmethylcarbonat (EMC) (1:1) in einem Fall ohne Zusatz von Phosphit, im anderen Falle mit Zusatz der angegebenen Menge Phosphit (Gew.-%) in Graphit/NCM111-Zellen bei einer jeweils angegebenen Spannung vs. Li/Li⁺ getestet. Als Separator wurde eine mikroporöse keramikbeschichtete Folie (unter dem Markennamen Separion von der Firma Evonik Industries AG erhältlich) eingesetzt. Die Zellen wurden mit einer C-Rate von 0.1C und einer anschließenden C-Rate von 0.5C für jeweils 3 Zyklen bei der im Folgenden beschriebenen Spannung formiert. Die C-Rate beschreibt den Lade-(oder Entlade-)Strom einer Batterie, bezogen auf die Kapazität C. In den Formierungszyklen ist jeweils ein konstanter Spannungsschritt von 3h integriert. Anschließend wurden die Zellen mit einer C-Rate von 1C zyklisiert. Die Ergebnisse von Messungen bei 4.5 V ergeben sich aus Tabelle 1.

In den folgenden Tabellen gibt die Kopfzeile "Elektrolyt-Zusatz" den Prozentsatz eines Phosphits in Gew.-% an, welches als Zusatz zum verwendeten Elektrolyt zugegeben wurde, "80 % SOH" die 80 % Kapazitätsretention des 130. Zyklus in Prozent an (In Klammern steht der jeweilige erreichte Zyklus), "Effizienz [%]" gibt die Erstzyklus-Effizienz in Prozent an und "Retention [%]" gibt die Kapazitätsretention in Prozent nach 100 Zyklen an.

**Tabelle 1**

| **Elektrolyt-Zusatz** | **Effizienz [%]** | **Retention [%]** | **80 % SOH** |
|---|---|---|---|
| 0 % | 82,2 | 83,9 | 68,6 (208. Zyklus) |
| 0,5 % PFPOEPi | 82,4 | 90,6 | 71,8 (299. Zyklus) |
| 0,5 % TFPOEPi | 83,7 | 94,8 | 75,2 (535. Zyklus) |
| 0,5 % nPrOEPi | 84,0 | 96,0 | 76,3 (761. Zyklus) |
| 0,5 % iPrOEPi | 82,8 | 96,1 | 76,2 (812. Zyklus) |
| 0,5 % HFiPrOEPi | 83,9 | 93,6 | 72,7 (368. Zyklus) |
| 0,5 % tBuOEPi | 58,0 | 98,8 | 78,7 (1095. Zyklus) |
| 0,5 % NFtBuOEPi | 79,1 | 87,6 | 68,2 (316. Zyklus) |
| 0,5 % PFPOEPi-1Me | 84,0 | 93,9 | 74,4 (651. Zyklus) |
| 0,5 % PFPOEPi-2Me | 83,8 | 94,6 | 74,7 (609. Zyklus) |
| 0,5 % PFPOEPi-4Me | 77,5 | 90,3 | 71,4 (602.Zyklus) |
| 0,5 % PFPOEPi-1CF₃ | 82,3 | 88,3 | 68.4 (370.Zyklus) |
| 0,5 % PFPOEPi-4CF₃ | 77,7 | 84.8 | 71.6 (348. Zyklus) |

Weitere Messungen wurden bei 4.2 V durchgeführt, diese sind in Tabelle 2 aufgeführt.

**Tabelle 2**

| **Elektrolyt-Zusatz** | **Effizienz [%]** | **Retention [%]** | **80 % SOH** |
|---|---|---|---|
| 0 % | 80.5 | 95.2 | 75.4 (1171. Zyklus) |
| 15,0 % PFPOEPi | 67.8 | 83.9 | 56.1 (161. Zyklus) |
| 15,0 % PFPOEPi-lMe | 70.7 | 92.9 | 63.6 (364. Zyklus) |
| 15,0 % PFPOEPi-2Me | 44.7 | 74.5 | 45.9 (248. Zyklus) |
| 15,0 % PFPOEPi-lCF3 | 80.1 | 96.4 | 77.2 (1468. Zyklus) |

Um den Einfluss des Phosphits auf die Brennbarkeit des Elektrolyten zu testen, wurde an einem erfindungsgemäßen Elektrolyten mit 1M LiPF₆ in EC:EMC (1:1) ein SET(Self-Extinguishing Time)-Test durchgeführt (Fig.1). Das Volumen des getesteten Elektrolyten betrug 500 µl. Als Detektor wurde UV-VIS verwendet.

In Tabelle 3 sind in den Zeilen zwei bis fünf Zeiten (in Sekunden) angegeben, welche mittels des SET-Tests ermittelt wurden. Die Messung beziehen sich auf eine 1M-Mischung LiPF₆ EC:EMC (1:1) mit dem in der Kopfzeile der Tabelle angegebenen Prozentsatz (Gew.-%) der in der linken Zeile angegebenen Verbindung. Der Anteil des angegebenen Phosphits reichte von 0 Gew.-% bis 15 Gew.-%. Für Felder mit einem "-" wurde keine Messung durchgeführt.

**Tabelle 3**

| | **0 %** | **0,5%** | **1,5%** | **2,5%** | **5,0%** | **10,0%** | **15,0%** |
|---|---|---|---|---|---|---|---|
| PFPOEPi | 40,2 | 45,3 | 46,0 | 45,3 | 38,8 | 20,7 | 15,4 |
| PFPOEPi-1CF₃ | 40,2 | 44,3 | 49,5 | 55,5 | 60,3 | 26, 4 | 0, 8 |
| PFPOEPi-lMe | 40,2 | - | - | - | - | - | 22, 6 |
| PFPOEPi-2Me | 40,2 | - | - | - | - | - | 17,3 |

Eine deutliche Abnahme der Brennbarkeit ist bereits ab einem Phosphitgehalt von 10 Gew.-% zu verzeichnen. Bei einem Gehalt von 15 Gew.-% Phosphit konnte der Elektrolyt je nach zugesetztem Phosphit als flammhemmend bis nicht-brennbar eingestuft werden.

Die in der vorstehenden Beschreibung, in den Ansprüchen sowie in der Zeichnung offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Elektrolyt, umfassend:
wenigstens ein Lithiumsalz;
wenigstens ein erstes und ein zweites organisches Lösemittel, wobei das erste organische Lösemittel eine Dielektrizitätskonstante von mehr als 90 (bei 40°C) aufweist und das zweite organische Lösemittel einen Siedepunkt von unter 110°C aufweist; und
wenigstens ein Phosphit der Formel (I) 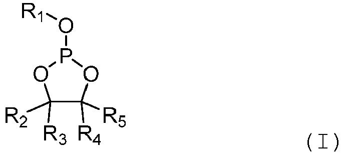 wobei R₁ eine n-Propoxygruppe, eine iso-Propoxygruppe, eine tert-Butoxygruppe, eine n-Pentafluorpropoxygruppe, eine n-Trifluorpropoxygruppe, eine iso-Hexafluoropropoxygruppe oder eine tert-Nonafluorbutoxygruppe ist und R₂, R₃, R₄ und R₅ unabhängig voneinander ausgewählt sind aus H, einer Trifluormethylgruppe oder einer C₂-C₆-Alkylgruppe, welche mit einer Trifluormethylgruppe substituiert ist.

2. Elektrolyt nach Anspruch 1, **dadurch gekennzeichnet, dass** R₁ eine *n*-Propoxygruppe, eine *iso*-Propoxygruppe oder eine *tert-*Butoxygruppe ist.

3. Elektrolyt nach Anspruch 2, **dadurch gekennzeichnet, dass** R₁ eine *tert*-Butoxygruppe ist.

4. Elektrolyt nach Anspruch 1, **dadurch gekennzeichnet, dass** R₁ eine *n*-Pentafluorpropoxygruppe ist.

5. Elektrolyt nach einem der vorherigen Ansprüche, **dadurch gekennzeichnet, dass** R₂ eine Trifluormethylgruppe ist und R₃, R₄ und R₅ H sind.

6. Elektrolyt nach einem der Ansprüche 1 bis 4, **dadurch gekennzeichnet, dass** R₂, R₃, R₄ und R₅ H sind.

7. Elektrolyt nach einem der vorherigen Ansprüche, **dadurch gekennzeichnet, dass** das wenigstens eine Phosphit in einem Anteil von 0,1 - 15 Gew.-%, bezogen auf das Gesamtgewicht der organischen Lösemittel, enthalten ist.

8. Verwendung eines Elektrolyts in einer Lithium-Sekundärbatterie bei einer Spannung größer 4,2 V, wobei der Elektrolyt folgendes umfasst:
wenigstens ein Lithiumsalz;
wenigstens ein erstes und ein zweites organisches Lösemittel, wobei das erste organische Lösemittel eine Dielektrizitätskonstante von mehr als 90 (bei 40°C) aufweist und das zweite organische Lösemittel einen Siedepunkt von unter 110°C aufweist; und
wenigstens ein Phosphit der Formel (I) 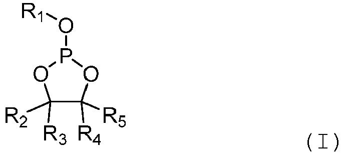 wobei R₁ eine vollständig oder teilweise halogensubstituierte, lineare oder verzweigte C₂-C₂₀-Alkylgruppe ist und R₂, R₃, R₄ und R₅ unabhängig voneinander ausgewählt sind aus H oder einer unsubstituierten oder vollständig oder teilweise halogensubstituierten, linearen oder verzweigten C₁-C₂₀-Alkylgruppe.

9. Lithium-Sekundärbatterie, umfassend
eine Kathode;
eine Anode;
einen Separator; und
den Elektrolyten nach einem der Ansprüche 1 bis 7.

10. Lithium-Sekundärbatterie nach Anspruch 9, **dadurch gekennzeichnet, dass** der Anteil des Phosphits im Elektrolyten 0,1 - 15 Gew.-%, bezogen auf das Gesamtgewicht der organischen Lösemittel, beträgt.

## Claims

1. An electrolyte comprising:
at least one lithium salt;
at least one first and one second organic solvent, the first organic solvent having a dielectric constant of more than 90 (at 40°C) and the second organic solvent having a boiling point of less than 110°C; and
at least one phosphite having the formula (I) 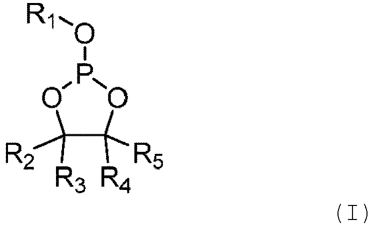
wherein R₁ is an n-propoxy group, an iso-propoxy group, a tert-butoxy group, an n-pentafluoropropoxy group, an n-trifluoropropoxy group, an iso-hexafluoropropoxy group or a tert-nonafluorobutoxy group, and R₂, R₃, R₄ and R₅ are selected, independently of one another, from H, a trifluoromethyl group or a C₂-C₆ alkyl group which is substituted with a trifluoromethyl group.

2. The electrolyte according to claim 1, **characterised in that** R₁ is an n-propoxy group, an *iso*-propoxy group or a *tert*-butoxy group.

3. The electrolyte according to claim 2, **characterised in that** R₁ is a *tert*-butoxy group.

4. The electrolyte according to claim 1, **characterised in that** R₁ is an *n*-pentafluoropropoxy group.

5. The electrolyte according to one of the preceding claims, **characterised in that** R₂ is a trifluoromethyl group, and R₃, R₄ and R₅ are H.

6. The electrolyte according to one of claims 1 to 4, **characterised in that** R₂, R₃, R₄ and R₅ are H.

7. The electrolyte according to one of the preceding claims, **characterised in that** the at least one phosphite is contained in a proportion of 0.1 to 15 wt.%, based on the total weight of the organic solvents.

8. Use of an electrolyte in a rechargeable lithium battery at a voltage greater than 4.2 V, the electrolyte comprising the following:
at least one lithium salt;
at least one first and one second organic solvent, the first organic solvent having a dielectric constant of more than 90 (at 40°C) and the second organic solvent having a boiling point of less than 110°C; and
at least one phosphite having the formula (I) 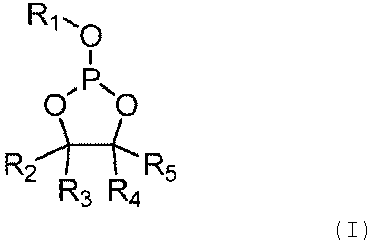
wherein R₁ is a completely or partially halogen-substituted, linear or branched, C₂-C₂₀ alkyl group, and R₂, R₃, R₄, and R₅ are selected, independently of one other, from H or an unsubstituted or completely or partially halogen-substituted, linear or branched, C₁-C₂₀ alkyl group.

9. A rechargeable lithium battery comprising:
a cathode;
an anode;
a separator; and
the electrolyte according to one of claims 1 to 7.

10. The rechargeable lithium battery according to claim 9, **characterised in that** the proportion of the phosphite in the electrolyte is 0.1 to 15 wt.%, based on the total weight of the organic solvents.

## Revendications

1. Electrolyte, comprenant :
au moins un sel de lithium ;
au moins un premier et un deuxième solvant organique, dans lequel le premier solvant organique présente une constante diélectrique supérieure à 90 (à 40 °C) et le deuxième solvant organique présente un point d'ébullition inférieur à 110 °C ; et
au moins un phosphite de la formule (I) 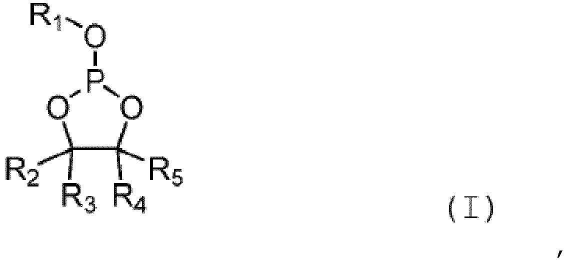
dans lequel R₁ est un groupe n-propoxy, un groupe iso-propoxy, un groupe tert-butoxy, un groupe n-pentafluoropropoxy, un groupe n-trifluoropropoxy, un groupe iso-hexafluoropropoxy ou un groupe tert-nonafluorobutoxy et R₂, R₃, R₄ et R₅ sont choisis indépendamment les uns des autres parmi H, un groupe trifluorométhyle ou un groupe alkyle C₂-C₆, lequel est substitué par un groupe trifluorométhyle.

2. Electrolyte selon la revendication 1, **caractérisé en ce que** R₁ est un groupe n-propoxy, un groupe iso-propoxy ou un groupe tert-butoxy.

3. Electrolyte selon la revendication 2, **caractérisé en ce que** R₁ est un groupe tert-butoxy.

4. Electrolyte selon la revendication 1, **caractérisé en ce que** R₁ est un n-pentafluoropropoxy.

5. Electrolyte selon l'une quelconque des revendications précédentes, **caractérisé en ce que** R₂ est un groupe trifluorométhyle et R₃, R₄ et R₅ sont H.

6. Electrolyte selon l'une quelconque des revendications 1 à 4, **caractérisé en ce que** R₂, R₃, R₄ et R₅ sont H.

7. Electrolyte selon l'une quelconque des revendications précédentes, **caractérisé en ce que** l'au moins un phosphite est contenu en une fraction de 0,1 - 15 %, par rapport au poids total des solvants organiques.

8. Utilisation d'un électrolyte dans une batterie secondaire au lithium à une tension supérieure à 4,2 V, dans laquelle l'électrolyte comprend ce qui suit :
au moins un sel de lithium ;
au moins un premier et un deuxième solvant organique, dans laquelle le premier solvant organique présente une constante diélectrique supérieure à 90 (à 40 °C) et le deuxième solvant organique présente un point d'ébullition inférieur à 110 °C ; et
au moins un phosphite de la formule (I) 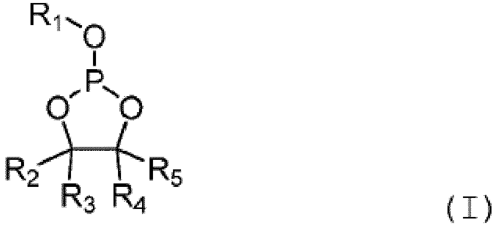
dans lequel R₁ est un groupe alkyle C₂-C₂₀ linéaire ou ramifié, substitué en totalité ou en partie par un halogène et R₂, R₃, R₄ et R₅ sont choisis indépendamment les uns des autres parmi H ou un groupe alkyle C₁-C₂₀ linéaire ou ramifié non substitué ou substitué en totalité ou en partie par un halogène.

9. Batterie secondaire au lithium, comprenant une cathode ;
une anode ;
un séparateur ; et
l'électrolyte selon l'une quelconque des revendications 1 à 7.

10. Batterie secondaire au lithium selon la revendication 9, **caractérisée en ce que** la fraction du phosphite dans l'électrolyte est de 0,1 - 15 % en poids par rapport au poids total des solvants organiques.
